# EUROPEAN PATENT APPLICATION

(11) **EP 4 316 700 A1**
(43) Date of publication of application: **07.02.2024**
(21) Application number: 21934303.5
(22) Date of filing: 02.07.2021
(51) Int. Cl.: B22F 12/00, B22F 12/67, B22F 12/70, B22F 10/28, B33Y 10/00, B33Y 30/00, B33Y 40/00, B23K 26/142

(54) **METAL 3D PRINTING DEVICE AND METAL 3D PRINTING METHOD**

(30) Priority: 30.03.2021 CN 202110341195; 26.05.2021 CN 202110580490
(71) Applicant: Guangdong Hanbang 3D Tech Co., Ltd., Guangdong 528427 (CN)
(72) Inventor: LIU, Jianye, Zhongshan, Guangdong 528427 (CN); GAO, Wenhua, Zhongshan, Guangdong 528427 (CN); XU, Kali, Zhongshan, Guangdong 528427 (CN); NIU, Liuhui, Zhongshan, Guangdong 528427 (CN); HU, Gaofeng, Zhongshan, Guangdong 528427 (CN)
(74) Representative: Zaboliene, Reda
(86) International application number: PCT/CN2021/104373
(87) International publication number: WO 2022/205655

(57) **Abstract**

A metal 3D printing device (100) comprises a building platform (100a), a first powder spreading arm (10), a second powder spreading arm (20), a gas stream unit (30) and a scanning module (40). The building platform (100a) is for supporting the powder. The first and second powder spreading arms (10) and (20) are spaced and configured for spreading powder in a direction parallel to the building platform (100a). The gas stream unit (30) comprises a gas blowing port (31) and a gas suction port (32), the gas blowing port (31) is provided in the first powder spreading arm (10) and the gas blowing port (31) is configured to blow gas to the building platform (100a), and the gas suction port (32) is provided in the second powder spreading arm (20) and the gas suction port (32) is configured to suction gas. The scanning module (40) is for emitting a laser to the powder preplaced between the first and second powder spreading arms (10) and (20) to solidify the powder to form the product. The metal 3D printing device (100) achieves the purpose of scanning while spreading powder, thereby improving printing efficiency. A metal 3D printing method is also provided, the method can also achieve continuous powder spreading and scanning, thereby improving printing efficiency.

## Description

### FIELD

The disclosure relates to a metal 3D printing device and a metal 3D printing method.

### BACKGROUND

In most of the prior art, most of the metal 3D printing process comprises the steps in a loop as follows: powder spreading for a powder, laser scanning, building platform dropping down and powder spreading for a next powder layer. Specifically, at first, spreading a powder layer of metal powder by a powder spreading arm, then, scanning by a laser to solidify the metal powder at the position desired, then, a building platform for carrying the powder and the built produce drops a distance of one layer thickness of the powder, and the powder spreading arm spreads another powder layer. Repeat the steps for a single layer above until the product is complete. Among building, it is also needed to suction smoke and dust formed by the condensation of the powder when scanning to prevent smoke and dust from affecting forming quality of the produce. However, this method has the problem that powder spreading and laser scanning cannot be carried out at the same time, so, the process to wait until the powder spreading step is done before scanning, which leads to low printing efficiency, especially when a large size product is to be formed.

### SUMMARY OF THE INVENTION

The disclosure is to provide a metal 3D printing device and a metal 3D printing method.

In a first aspect, the disclosure provides a metal 3D printing device, comprising:
a building platform supporting the powder and the product formed by the powder;
a first powder spreading arm, which is arranged above the building platform;
a second powder spreading arm, which is spaced from the first powder spreading arm, wherein each of the first powder spreading arm and the second powder spreading arm is configured for moving in a direction parallel to the building platform to spread the powder on the building platform;
a gas stream unit comprising a gas blowing port and a gas suction port, wherein, the gas blowing port is provided in the first powder spreading arm and the gas blowing port is configured to blow gas to the building platform, and the gas suction port is provided in the second powder spreading arm and the gas suction port is configured to suction gas; and
a scanning module positioned above the building platform for emitting a laser to the powder preplaced on the building platform between the first powder spreading arm and the second powder spreading arm, the laser solidifying the powder to form the product;
wherein, the scanning module emits the laser while the first powder spreading arm spreads the powder, and the second powder spreading arm moves with the first powder spreading arm and the gas stream unit suctions smoke and dust formed by solidifying the powder, and when a powder layer is spread by the first powder spreading arm and solidified by the scanning module on the building platform, the building platform is lowered by a distance of a layer thickness of the powder and the second powder spreading arm is reversed to move to spread another powder layer followed by the scanning module emitting laser to solidify the other powder layer, and the first powder spreading arm follows the second powder spreading arm to move thereby carrying the gas stream unit to suction smoke and dust.

For the metal 3D printing device described above, the scanning module emits the laser while the first powder spreading arm spreads the powder, so that powder spreading and laser emitting are done simultaneously, together with the second powder spreading arm following the first powder spreading arm to move, as a result, the gas stream unit can form the gas curtain to suction smoke and dust formed by solidifying the powder, so as to improve forming quality of the product. In addition, after the first powder spreading arm finishes powder spreading following the module finishing scanning, the second powder spreading arm moves in reverse for spreading another powder layer, together with the scanning module emitting the laser and the first powder spreading arm following the second powder spreading arm to move for the gas stream unit continues to suction smoke and dust, so that continuous powder spreading and continuous scanning can be realized, and thus improving the printing efficiency.

In some embodiment, the metal 3D printing device further comprises a powder spreading actuator, the powder spreading actuator is connected to the first powder spreading arm and the second powder spreading arm, respectively, for driving the first powder spreading arm and the second powder spreading arm to move back and forth in a direction of powder spreading, the powder spreading actuator is configured for adjusting a distance between the first powder spreading arm and the second powder spreading arm to adjust a printing span of the laser according to the shape of the product.

In some embodiment, the scanning module comprises a scanning driver and a plurality of scanning mirror units, the plurality of scanning mirror units are arranged in a direction perpendicularly to the direction of powder spreading, the scanning driver is configured to drive the plurality of scanning mirror units to move in the direction of powder spreading, and each of the plurality of scanning mirror units is configured to emit the laser for solidifying the powder below thereof.

In some embodiment, the metal 3D printing device is provided with a forming chamber, the plurality of scanning mirror units are received in the forming chamber, the scanning module further comprises a protective mirror and a blowing member, the protective mirror is configured for sealing the plurality of scanning mirror units , the blowing member is configured for blowing gas to form a gas curtain around the protective mirror to improve the cleanliness of the plurality of scanning mirror units in the forming chamber.

In some embodiment, the metal 3D printing device further comprises a powder supplying unit, the first powder spreading arm is provided with a powder discharging unit and the second powder spreading arm is provided with another powder discharging unit, the powder supplying unit is configured for supplying the powder to the powder discharging units of the first powder spreading arm and the second powder spreading arm, the powder discharging units of the first powder spreading arm and the second powder spreading arm are configured for controlling the powder to discharge or not and controlling an amount of the powder.

In some embodiment, the first powder spreading arm is provided with a blade, the second powder spreading arm is provided with another blade, the blades of the first powder spreading arm and the second powder spreading arm are both extended in a direction perpendicular to the direction of powder spreading and the blades are towards the building platform, the blades are configured for scraping the powder on the building platform to form the powder layer of desired thickness and flatness.

In some embodiment, the metal 3D printing device further comprises a thermostatic unit and an auxiliary purification unit, the thermostatic unit is configured to increase a temperature constancy of each device inside the forming chamber, and the auxiliary purification unit is configured to suctions smoke and dust overflowing into the forming chamber.

In some embodiment, the metal 3D printing device further comprises a powder suction unit, the powder suction unit comprises a powder suction driver and a powder suction tube, the powder suction driver is configured to drive the powder suction tube to move, the powder suction tube is configured to clean up the powder unsolidified on the building platform after the product is formed.

In some embodiment, the first powder spreading arm, the second powder spreading arm, the gas stream unit and the scanning module form a printing set, and the metal 3D printing device comprises the building platform and a plurality of the printing sets to print a plurality of regions of the building platform, respectively.

In a second aspect, the disclosure provides a metal 3D printing method, comprising:
a first powder spreading arm moving and spreading powder to a building platform while moving a second powder spreading arm that follows behind the first powder spreading arm;
a scanning module emitting a laser to the powder between the first powder spreading arm and the second powder spreading arm to solidify the powder at a predetermined position;
a gas stream unit forming a gas curtain between the first powder spreading arm and the second powder spreading arm to suction smoke and dust as the powder solidifies;
if the product forming is not completed, lowering the building platform by a distance of a powder layer;
the second powder spreading arm moving in reverse and spreading the powder to the building platform while moving the first powder spreading arm behind the second powder spreading arm;
the scanning module emitting a laser to the powder on the building platform between the first powder spreading arm and the second powder spreading arm to solidify the powder at a predetermined position; and
the gas stream unit forming a gas curtain between the first powder spreading arm and the second powder spreading arm to suction smoke and dust as the powder solidifies.

The metal 3D printing method described above can realize continuous powder spreading and continuous scanning, which enhances the printing efficiency .

### BRIEF DESCRIPTION OF THE DRAWINGS

FIG. 1 shows a schematic diagram of a metal 3D printing device in an embodiment of the disclosure.
FIG. 2 shows a top view of the metal 3D printing device in FIG. 1.
FIG. 3 shows a schematic diagram of a metal 3D printing device in another embodiment of the disclosure.
FIG. 4 shows a schematic diagram of a metal 3D printing device in a third embodiment of the disclosure.
FIG. 5 shows a top view of the metal 3D printing device in FIG. 3.
FIG. 6 shows a flowchart of the metal 3D printing method in an embodiment of the disclosure.

### Description of main components or elements:

Metal 3D printing device 100,
Building platform 100a,
Building chamber 100b,
Window 100c,
First powder spreading arm 10,
Powder discharging unit 11, 21,
Blade 12, 22,
Second powder spreading arm 20,
Gas stream unit 30,
Gas blowing port 31,
Gas suction port 32,
Scanning module 40,
Scanning driver 41,
Scanning mirror unit 42,
Powder spreading driver 50,
Powder supplying unit 60,
Auxiliary purification unit 70,
Powder suction unit 80,
Metal 3D printing method 200.

### DETAILED DESCRIPTION

The technical scheme in the embodiment of the disclosure will be described in combination with the attached drawings in the embodiment of the application. Obviously, the described embodiments are only part of the embodiments of the application, not all embodiments.

It should be noted that when an element is said to be "fixed to" another element, it can be directly on another element or there can be an intervening element. When a component is "connected" to another component, it can be directly connected to another component or there may be intermediate components at the same time. When a component is "set on" another component, it can be set directly on another component or there may be intervening components at the same time. The terms "vertical", "horizontal", "left", "right" and similar expressions used in this paper are for illustrative purposes only.

Unless otherwise defined, all technical and scientific terms used herein have the same meanings as those commonly understood by those skilled in the technical field of the application. The terms used in the specification of the application herein are only for the purpose of describing specific embodiments and are not intended to limit the application. The term "and / or" as used herein includes any and all combinations of one or more related listed items.

Some embodiments of the present application are described in detail. Without conflict, the following embodiments and features in the embodiments can be combined with each other.

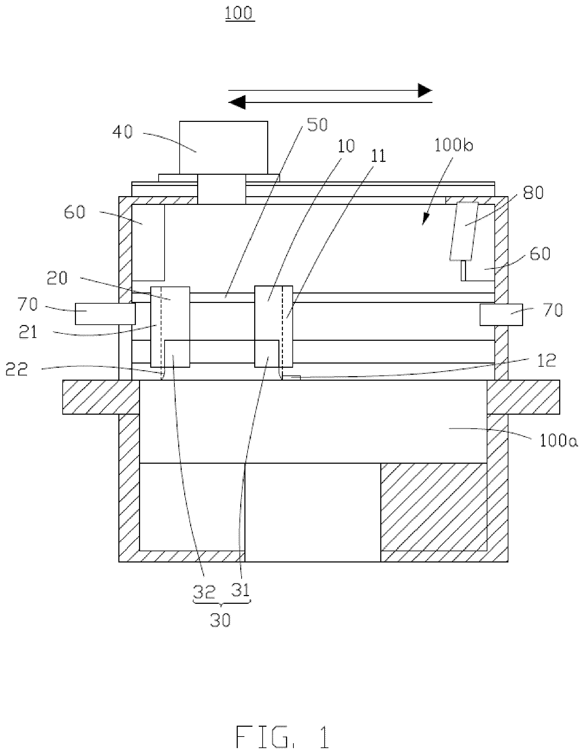

Referring to FIG. 1, an embodiment of the disclosure provides a metal 3D printing device 100 for forming a three-dimensional product from successive powder layers, the metal 3D printing device 100 comprises a building platform 100a, a first powder spreading arm 10, a second powder spreading arm 20, a gas stream unit 30, and a scanning module 40. The building platform 100a is horizontally arranged, the building platform 100a is liftable and the building platform 100a is for supporting the powder and the product formed by the powder. The material of the powder may be metal. The first powder spreading arm 10 and the second powder spreading arm 20 are placed above the building platform 100a and are at a same distance from the building platform 100a, i.e., the first powder spreading arm 10 and the second powder spreading arm 20 are placed at a same height. The second powder spreading arm 20 and the first powder spreading arm 10 are provided parallel to each other along a length direction, and the second powder spreading arm 20 and the first powder spreading arm 10 are spaced from each other at a certain distance. The first powder spreading arm 10 and the second powder spreading arm 20 may move in a plane parallel to the building platform 100a, and discharge the powder downward to the building platform 100a during moving, so as to spread a metal powder layer to the building platform 100a.

The gas stream unit 30 comprises a gas blowing port 31 and a gas suction port 32. The gas blowing port 31 is disposed at the first powder spreading arm 10. The gas suction port 32 is disposed at the second powder spreading arm 20. The gas blowing port 31 is configured for blowing the powder on an uppermost layer of the building platform 100a in a direction towards the second powder spreading arm 20. The gas suction port 32 is configured to suction a gas blown out of the gas blowing port 31 to form a gas curtain between the first powder spreading arm 10 and the second powder spreading arm 20, the gas curtain may take away smoke and dust formed when the powder is solidified, so as to prevent smoke and dust from staying in the forming chamber and interfering with a laser for solidifying the powder, which may affect the forming quality. In some embodiments, the gas blowing port 31 and the gas suction port 32 are connected to an external gas purification system through a pipe. The gas blowing port 31 may be connected to the first powder spreading arm 10 by a lifting mechanism or a tilting mechanism and the gas suction port 32 may be connected to the second powder spreading arm 20 by another lifting mechanism or another tilting mechanism, so the gas blowing port 31 and the gas suction port 32 may be adjusted flexibly or avoid nearby components when printing.

The scanning module 40 is placed above the building platform 100a for emitting the laser to the powder on the building platform 100a located in an area between a first projection and a second projection. The first projection is the projection of the first powder spreading arm 10 on the building platform 100a in a vertical direction. The second projection is the projection of the second powder spreading arm 20 on the building platform 100a in the vertical direction. The scanning module 40 is to solidify the powder to form the product.

An embodiment of the metal 3D printing device 100 printing the product will be described below. The first powder spreading arm 10 moves from a left side to a right side of the building platform 100a to spread a powder layer to the building platform 100a, and the second powder spreading arm 20 follows the first powder spreading arm 10 to move on a left side of the first powder spreading arm 10, and at the same time, the scanning module 40 emits a laser to the powder between the first powder spreading arm 10 and the second powder spreading arm 20, so that spreading the powder and laser printing may be done simultaneously; at the same time, the gas stream unit 30 suctions smoke and dust formed by solidifying the powder; after the first powder spreading arm 10 is finished spreading the powder, i.e., after a powder layer the has been printed, the building platform 100a descends by a distance of a powder layer, to provide a space for a next powder layer; then, the second powder spreading arm 20 moves to the left to spread another powder layer, and the first powder spreading arm 10 follows the first powder spreading arm 10 to the left, while the scanning module 40 emits a laser to the powder between the first powder spreading arm 10 and the second powder spreading arm 20, and the gas stream unit 30 continues to suction smoke and dust formed by solidifying the powder meanwhile; then, repeat the above process until the product is completed.

The metal 3D printing device 100 further comprises a powder spreading driver 50. The powder spreading driver 50 is connected to the first powder spreading arm 10 and the second powder spreading arm 20, respectively, for driving the first powder spreading arm 10 and the second powder spreading arm 20 to move back and forth in a direction of powder spreading. In some embodiments, a printing span, which is a distance between the first powder spreading arm 10 and the second powder spreading arm 20, may be a constant value. In other embodiments, the powder spreading driver 50 may adjust the distance between the first powder spreading arm 10 and the second powder spreading arm 20 at any time during the product is printed, for example, the distance between the first powder spreading arm 10 and the second powder spreading arm 20 may be adjusted according to a shape of a slice in current printing layer of the product, and the printing span of the laser and a gas curtain span are adjusted so as to improve efficiency and quality of printing, wherein ,the gas curtain span is a distance between the gas blowing port 31 and the gas suction port 32. For example, if the product is conical, the distance between the first powder spreading arm 10 and the second powder spreading arm 20 is larger when printing lower layers of the product, to provide a printing span of the laser large enough for printing, while the distance between the first powder spreading arm 10 and the second powder spreading arm 20 is smaller when printing upper layers of the product, to reduce the gas curtain span to increase suction rate of smoke and dust, and thus to improve forming quality of the product.

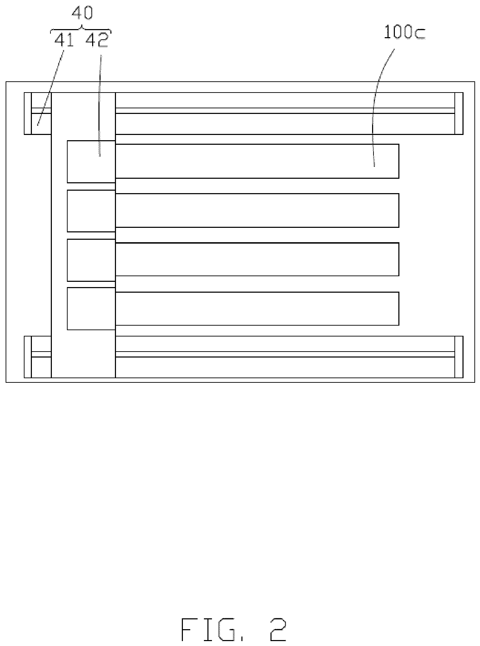

Referring to FIG. 2, in some embodiments, the scanning module 40 comprises a scanning driver 41 and a plurality of scanning mirror units 42. The plurality of scanning mirror units 42 are arranged and disposed in a direction perpendicular to the direction of powder spreading. The scanning driver 41 is configured to drive the plurality of scanning mirror units 42 in the direction of powder spreading. Each of the plurality of scanning mirror units 42 is configured to emit the laser for solidifying the powder below. In the embodiment illustrated in FIG. 2, four scanning mirror units 42 are provided, and in other embodiments, the number of scanning mirror units 42 may be varied accordingly to a width of the building platform 100a, such as providing 5 to 20 scanning mirror units 42 in a range of 1 meter.

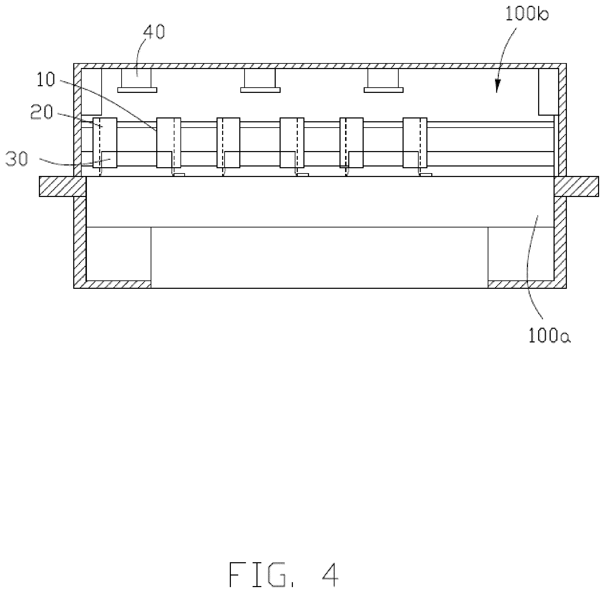

Referring to FIG. 1, the metal 3D printing device 100 is provided with a forming chamber 100b. In some embodiments, the scanning module 40 is provided outside of the forming chamber 100b and is located at a top of the metal 3D printing device 100, and a window 100c is provided at the top of the metal 3D printing device 100 to transmit the laser. In other embodiments, the plurality of scanning mirror units 42 are disposed inside the forming chamber 100b (as shown in FIG. 4), and the scanning module 40 further comprises a protective mirror and a blowing member (not shown in FIGs of the disclosure), the protective mirror is configured to seal the plurality of scanning mirror units 42, and the blowing member is configured for blowing gas to form a gas curtain around the protective mirror to improve the cleanliness of the plurality of scanning mirror units 42 in the forming chamber 100b.

In some embodiments, the metal 3D printing device 100 further comprises two powder supplying units 60. The first powder spreading arm 10 is provided with a powder discharging unit 11 and the second powder spreading arm 20 is provided with a powder discharging unit 21. One of the two powder supplying units 60 is disposed on the left side of the forming chamber 100b, the other of the two powder supplying units 60 is disposed on the right side of the forming chamber 100b, the powder supplying unit 60 on the left is configured for supplying the powder to the powder discharging unit 11 when the powder discharging unit 11 is at the left side of the forming chamber 100b, the powder supplying unit 60 on the right is configured for supplying the powder to the powder discharging unit 21 when the powder discharging unit 21 is at the right side of the forming chamber 100b. The powder discharging units 11 and 21 are configured for controlling the powder to discharge or not, and the powder discharging units 11 and 21 are provided with a switch therein, respectively. The switch of the powder discharging unit 11 / 21 may adjust an amount of the powder discharged each time.

In some embodiments, the first powder spreading arm 10 is provided with a blade 11, the second powder spreading arm 20 is provided with a blade 21. The blades 11 and 21 are both extended in a direction perpendicular to the direction of powder spreading and both of the blades 11 and 21 are towards the building platform 100a. The blades 11 and 21 is configured for scraping the powder higher than a preset layer thickness of the powder to form the powder layer. An automatic adjusting mechanism (not shown in FIGs) is provided between the blade 12 and the first powder spreading arm 10, and another automatic adjusting mechanism (not shown in FIGs) is provided between the blade 22 and the second powder spreading arm 20, so that the blades 12 and 22 may move within a certain range of heights, so each layer thickness may be adjusted in printing, making sure that the powder in each layer may be compacted.

In some embodiments, the metal 3D printing device 100 also comprises a thermostat unit (not shown) and an auxiliary purification unit 70, and the thermostat unit is configured to ensure that the temperature of all precision devices in the forming chamber 100b is constant, so as to improve printing accuracy. The auxiliary purification unit 70 is located on both sides of the forming chamber 100b, and is used to blow gas into the forming chamber 100b and suction gas from the forming chamber 100b auxiliary, so as to assist in absorbing smoke and dust overflowing into the forming chamber 100b.

In some embodiments, the metal 3D printing device 100 further comprises a powder suction unit 80, the powder suction unit 80 comprising a powder suction driver and a powder suction tube (not shown in FIGs), the powder suction driver is used to drive the powder suction tube to move, and the powder suction tube is used to clean up the powder unsolidified on the building platform 100a after printing is completed. As an exemplary embodiment, the powder suction driver may be a three-axis linear slide driver or a manipulator, and the powder is configured to clear excess powder fully automatically and automatically programmable after printing for.

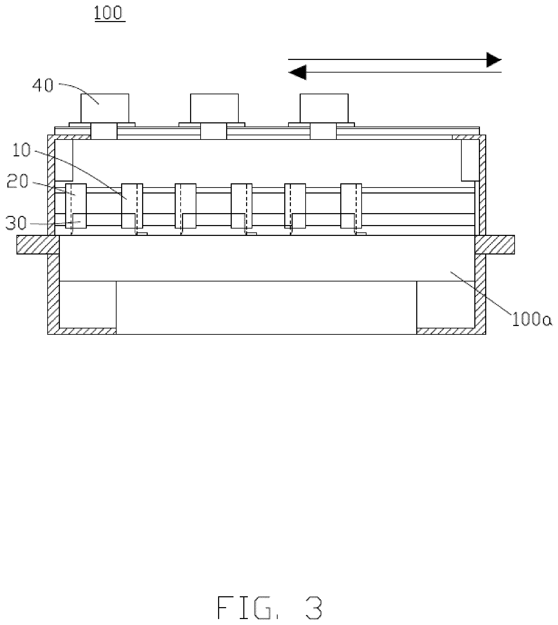

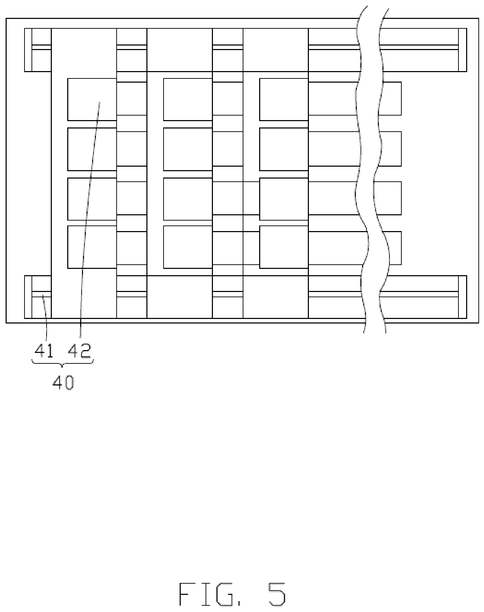

Referring to FIGs 3, 4, and 5, it will be understood that, in the embodiments, the first powder spreading arm 10, the second powder spreading arm 20, the gas stream unit 30 and the scanning module 40 described above form a printing set, the metal 3D printing device 100 comprises the building platform and a plurality of the printing sets to print a plurality of regions of the building platform, respectively.

Referring to FIG. 1, in summary, an embodiment of the metal 3D printing device 100 printing the product is as follows:
Step 1, the powder supplying unit 60 on the left side supplies the metal powder to the powder discharging units 11 and 21, the powder spreading driver 50 drives the first powder spreading arm 10 to move from the left side to the right side of the building platform 100a, and the powder discharging unit 11 spread a powder layer to the building platform 100a while the second powder spreading arm 20 follows the first powder spreading arm 10 to move at the left side of the first powder spreading arm 10, the blade 12 scraps away the powder higher than a preset layer thickness of the powder to ensure the thickness of the powder;
Step 2, at the same time, the scanning driver 41 drives the plurality of scanning mirror units 42 to move to the right, and the plurality of scanning mirror units 42 emit the lasers to the powder between the first powder spreading arm 10 and the second powder spreading arm 20 to realize a flight printing, the flight printing is an algorithm that integrates path synchronization compensation of the plurality of scanning mirror units 42, the algorithm uses constant arithmetic to precalculate and divide data for writing into a control system of the plurality of scanning mirror units 42 respectively, while smoke and dust formed by solidifying of the powder is suctioned by the gas curtain formed by the gas blowing port 31 and the gas suction port 32;
Step 3, after the first powder spreading arm 10 and the second powder spreading arm 20 move to the right side, the powder supplying unit 60 on the right side supplies the metal powder to the powder discharging unit 21; the building platform 100a descends by one powder layer, and then the powder spreading driver 50 drives the second powder spreading arm 20 to move to the left and spread another powder layer by the powder discharging unit 21 while moving, while the first powder spreading arm 10 follows the second powder spreading arm 20 to move to the left, the blade 22 scraps away the powder higher than a preset layer thickness of the powder to ensure the thickness of the powder; the plurality of scanning mirror units 42 emit the lasers to the powder between the first powder spreading arm 10 and the second powder spreading arm 20, while the gas stream unit 30 suctions smoke and dust formed by solidifying the powder; throughout the entire printing process, the thermostat unit and the auxiliary purification unit 70 keep operating;
Step 4, repeat step 1, 2 and 3until the product is completed;
Step 5, take away the product, and the powder suction unit 80 cleans up the powder unsolidified on the building platform 100a. As an exemplary example, the distance between the first powder spreading arm 10 and the second powder spreading arm 20 ranges from 100 mm to 500 mm, or the distance may be several meters or larger.

It will be understood that, in some other embodiments, the plurality of canning mirror units 42 of the scanning module 40 are fixed in a row, the first powder spreading arm 10 and the second powder spreading arm 20 are located below the scanning mirror unit 42 and the relative positions between the first powder spreading arm 10, the second powder spreading arm 20 and the plurality of canning mirror units 42 are fixed, the building platform 100a moves horizontally and reciprocally relative to the first powder spreading arm 10 and the second powder spreading arm 20 in order to realize the printing of each layer, i.e., the building platform 100a can be lifted and translated, which can also meet the needs of printing a large size range. As an exemplary example, the movement of the building platform 100a is driven by a high-precision drive unit such as a linear motor or a servo drive.

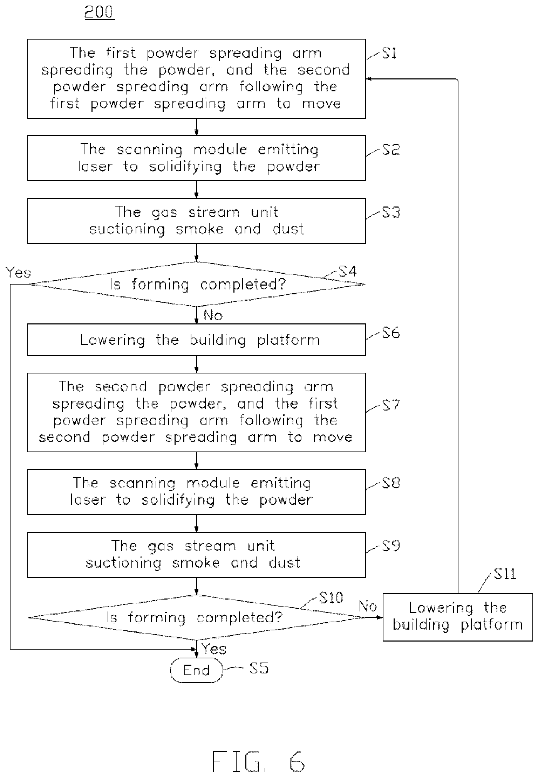

Referring to FIG. 6, an embodiment of the disclosure also provides a metal 3D printing method 200, comprising:
S 1: the first powder spreading arm 10 moves and spreads the powder to the building platform 100a, and the second powder spreading arm 20 follows behind the first powder spreading arm 10 to move;
S2: the scanning module 40 emits the laser to the powder between the first powder spreading arm 10 and the second powder spreading arm 20 to solidify the powder at a predetermined position;
S3: the gas stream unit 30 forms a gas curtain between the first powder spreading arm 10 and the second powder spreading arm 20 to suction smoke and dust formed by solidifying the powder;
S4: determining whether the product forming is completed;
if the product forming is completed:
S5: end;
if the product forming is not completed:
S6: the building platform 100a descends a distance of one layer thickness of the powder;
S7: the second powder spreading arm 20 moves in reverse and spreads the powder to the building platform 100a, and the first powder spreading arm 10 follows behind the second powder spreading arm 20 to move;
S8: the scanning module 40 emits the laser to the powder between the first powder spreading arm 10 and the second powder spreading arm 20 to solidify the powder at a predetermined position;
S9: the gas stream unit 30 forms a gas curtain between the first powder spreading arm 10 and the second powder spreading arm 20 to suction smoke and dust formed by solidifying the powder;
S10: determining whether the product forming is completed;
if the product forming is not completed:
S11: the building platform 100a descends a distance of one layer thickness of the powder and returns to S1;
if the product forming is completed, return to S5.

For the metal 3D printing device 100 and the metal 3D printing method 200 described above, the scanning module 40 emits the laser while the first powder spreading arm 10 spreads the powder, so that the process of powder spreading and laser emitting are done simultaneously, together with the second powder spreading arm 20 following the first powder spreading arm 10 to move, as a result, the gas stream unit 30 can form the gas curtain to suction smoke and dust formed by solidifying the powder, so as to improve forming quality of the product. In addition, after the first powder spreading arm 10 finishes spreading powder, the second powder spreading arm 20 moves in reverse for spreading another powder layer, together with the scanning module 40 emitting the laser and the first powder spreading arm 10 following the second powder spreading arm 20 to move for the gas stream unit 30 continues to suction smoke and dust, so that continuous powder spreading and continuous printing can be realized, and thus improving the printing efficiency.

The above implementation methods are only used to illustrate the technical solution of this application and not to limit it. Although the application has been described in detail with reference to the preferred implementation methods mentioned above, ordinary technical personnel in the art should understand that modifications or equivalent replacements to the technical solution of this application should not deviate from the spirit and scope of the technical solution of this application.

## Claims

1. A metal 3D printing device, comprising:
a building platform supporting the powder and the product formed by the powder;
a first powder spreading arm, which is arranged above the building platform;
a second powder spreading arm, which is spaced from the first powder spreading arm, wherein each of the first powder spreading arm and the second powder spreading arm is configured for moving in a direction parallel to the building platform to spread the powder on the building platform;
a gas stream unit comprising a gas blowing port and a gas suction port, wherein, the gas blowing port is provided in the first powder spreading arm and the gas blowing port is configured to blow gas to the building platform, and the gas suction port is provided in the second powder spreading arm and the gas suction port is configured to suction gas; and
a scanning module positioned above the building platform for emitting a laser to the powder between the first powder spreading arm and the second powder spreading arm, the laser solidifying the powder to form the product;
wherein, the scanning module emits the laser while the first powder spreading arm spreads the powder, and the second powder spreading arm moves with the first powder spreading arm and the gas stream unit suctions smoke and dust formed by solidifying the powder, and when a powder layer is spread by the first powder spreading arm, the building platform is lowered by a distance of a layer thickness of the powder and the second powder spreading arm is reversed to move to spread another powder layer followed by the scanning module emitting laser to solidify the other powder layer, and the first powder spreading arm follows the second powder spreading arm to move thereby carrying the gas stream unit to suction smoke and dust.

2. A metal 3D printing device according to according to claim 1, wherein the metal 3D printing device further comprises a powder spreading actuator, the powder spreading actuator is connected to the first powder spreading arm and the second powder spreading arm, respectively, for driving the first powder spreading arm and the second powder spreading arm to move back and forth in a direction of powder spreading, the powder spreading actuator is configured for adjusting a distance between the first powder spreading arm and the second powder spreading arm to adjust a printing span of the laser according to the shape of the product.

3. A metal 3D printing device according to claim 1, wherein the scanning module comprises a scanning driver and a plurality of scanning mirror units, the plurality of scanning mirror units are arranged in a direction perpendicularly to the direction of powder spreading, the scanning driver is configured to drive the plurality of scanning mirror units to move in the direction of powder spreading, and each of the plurality of scanning mirror units is configured to emit the laser for solidifying the powder below thereof.

4. A metal 3D printing device according to claim 3, wherein the metal 3D printing device is provided with a forming chamber, the plurality of scanning mirror units are received in the forming chamber, the scanning module further comprises a protective mirror and a blowing member, the protective mirror is configured for sealing the plurality of scanning mirror units , the blowing member is configured for blowing gas to form a gas curtain around the protective mirror to improve the cleanliness of the plurality of scanning mirror units in the forming chamber.

5. A metal 3D printing device according to claim 1, wherein the metal 3D printing device further comprises a powder supplying unit, the first powder spreading arm is provided with a powder discharging unit and the second powder spreading arm is provided with another powder discharging unit, the powder supplying unit is configured for supplying the powder to the powder discharging units of the first powder spreading arm and the second powder spreading arm, the powder discharging units of the first powder spreading arm and the second powder spreading arm are configured for controlling the powder to discharge or not and controlling an amount of the powder.

6. A metal 3D printing device according to claim 1, wherein the first powder spreading arm is provided with a blade, the second powder spreading arm is provided with another blade, the blades of the first powder spreading arm and the second powder spreading arm are both extended in a direction perpendicular to the direction of powder spreading and the blades are towards the building platform, the blades are configured for scraping the powder on the building platform to form the powder layer of desired thickness and flatness.

7. A metal 3D printing device according to claim 1, wherein the metal 3D printing device further comprises a thermostatic unit and an auxiliary purification unit, the thermostatic unit is configured to increase a temperature constancy of each device inside the forming chamber, and the auxiliary purification unit is configured to suctions smoke and dust overflowing into the forming chamber.

8. A metal 3D printing device according to claim 1, wherein the metal 3D printing device further comprises a powder suction unit, the powder suction unit comprises a powder suction driver and a powder suction tube, the powder suction driver is configured to drive the powder suction tube to move, the powder suction tube is configured to clean up the powder unsolidified on the building platform after the product is formed.

9. A metal 3D printing device according to claim 1, wherein the first powder spreading arm, the second powder spreading arm, the gas stream unit and the scanning module form a printing set, and the metal 3D printing device comprises the building platform and a plurality of the printing sets to print a plurality of regions of the building platform, respectively.

10. A metal 3D printing method, comprising:
a first powder spreading arm moving and spreading powder to a building platform while moving a second powder spreading arm that follows behind the first powder spreading arm ;
a scanning module emitting a laser to the powder between the first powder spreading arm and the second powder spreading arm to solidify the powder at a predetermined position;
a gas stream unit forming a gas curtain between the first powder spreading arm and the second powder spreading arm to suction smoke and dust as the powder solidifies;
if the product forming is not completed, lowering the building platform by a distance of a powder layer;
the second powder spreading arm moving in reverse and spreading the powder to the building platform while moving the first powder spreading arm behind the second powder spreading arm;
the scanning module emitting a laser to the powder on the building platform between the first powder spreading arm and the second powder spreading arm to solidify the powder at a predetermined position; and
the gas stream unit forming a gas curtain between the first powder spreading arm and the second powder spreading arm to suction smoke and dust as the powder solidifies.
